# EUROPEAN PATENT SPECIFICATION

(11) **EP 3 964 411 B1**
(45) Date of publication and mention of the grant of the patent: **12.07.2023**
(21) Application number: 20194048.3
(22) Date of filing: 02.09.2020
(51) Int. Cl.: B60T 17/08, B60T 17/22

(54) **BRAKE RELEASE MECHANISM FOR A SPRING BRAKE ACTUATOR AND SPRING BRAKE ACTUATOR COMPRISING SUCH BRAKE RELEASE MECHANISM**
BREMSLÖSEMECHANISMUS FÜR EINEN FEDERSPEICHERBREMSZYLINDER UND FEDERSPEICHERBREMSZYLINDER MIT SOLCH EINEM BREMSLÖSEMECHANISMUS
MÉCANISME DE LIBÉRATION DE FREIN POUR UN ACTIONNEUR DE FREIN À RESSORT ET ACTIONNEUR DE FREIN À RESSORT COMPRENANT UN TEL MÉCANISME DE LIBÉRATION DE FREIN

(43) Date of publication of application: 09.03.2022
(73) Proprietor: ZF CV Systems Europe BV, 1170 Brussels (BE)
(72) Inventor: FRANCZUK, Michal, 49-305 Brzeg (PL); ZYGADLO, Krzysztof, 58-212 Jazwina (PL)
(74) Representative: Rabe, Dirk-Heinrich

(56) References cited:
- DE-A1- 19 630 795
- US-A- 5 632 192

## Description

The invention relates to a brake release mechanism for a spring brake actuator, in particular a parking or emergency spring brake actuator for use in a commercial vehicle, said release mechanism comprising a brake release bolt having a threaded portion and an operating section for operating the release bolt when inserted in to a spring brake actuator, a running nut engaging the threaded portion, said running nut being adapted to axially travel along the threaded portion in order to move a spring brake actuator piston against a force of an actuator power spring, an indicator device comprising an indicator pin having a longitudinal axis and being at least partially accommodated in a receiving space of the release bolt, and a pin actuator for moving the pin relative to the receiving space along its longitudinal axis and wherein the pin actuator comprises an indicator cap being configured to abut against the running nut for moving the pin actuator along its longitudinal axis.

Such a brake release mechanism is known from US 5632192 A.

Brake release mechanisms for spring brake actuators are generally known in the prior art. It is the aim of such release mechanisms to release a spring brake actuator, for example in case of pneumatic system malfunctions. In known brake release mechanisms, the actuator is released by rotating a brake release bolt. Such release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such. In is furthermore known that brake release mechanisms comprise an indicator device having an indicator pin which is at least partially accommodated in a receiving space of the release bolt. The indicator pin is movable axially with respect to the release bolt receiving space. Based on the position of the indicator pin, an operator is able to determine whether the brake release mechanism is in a release state at which the spring brake actuator is released or in a driving state at which the release mechanism does not act upon the actuator piston and the power spring. State of the art brake release mechanisms comprise pin actuators for moving the indicator pin relative to the receiving space. These pin actuators are often attached to the indicator pin via non-permanent snap-fit connections.

Although these systems are well proven, there is still room for improvement. One of the drawbacks of these state-of-the-art systems is that they require a considerable amount of additional installation space contravening the market demand for compact spring brake actuators. Additionally, known brake release mechanisms comprise lots of customized parts that are costly to manufacture and require an elaborate assembly routine. Furthermore, the typically used snap-fit connections between pin actuators and indicator pins are less durable in some environments.

Therefore, it was an object of the invention to provide a brake release mechanism for a spring brake actuator that overcomes of the above-mentioned issues as far as possible. In particular, it was an object of the invention to provide a brake release mechanism that offers means to indicate that state of the brake release mechanism while at the same time reducing the required installation space, being durable, easy to assemble and less costly.

According to the invention, it is proposed that the indicator cap and the indicator pin are non-releasably connected to one another in their assembled state by a permanent bond and/or by a permanent deformation portion arranged at the indicator pin for providing a durable connection between the indicator cap and the indicator pin (claim 1).

Preferably, the indicator cap and the indicator pin are coupled by material joining, positive fit or a combination of both. In embodiments where a positive fit is desired, the two parts are preferably coupled together and held in the assembled state by permanently deforming one or both of the parts by cold or hot forming, for example staking, welding or pressing.

The invention is based on the finding that such a pin actuator design offers a number of advantages. On the one hand, the mentioned pin actuator requires less space than known solutions, comprises less parts and is easier to assemble. On the other hand, the durability of the connection between the pin actuator and the indicator pin is significantly improved compared to known snap-fit connections. This increases the overall durability of the brake release mechanisms and reduces maintenance costs. When utilizing a permanent bond to connect the indicator cap and the indicator pin, the two parts are attached to one another permanently and unsolvably. This solution has been found to be beneficial for many applications. On the other hand, the indicator pin might be connected to the indicator cap by arranging a permanent deformation portion at the indicator pin, such as by cold or hot forming. In this regard, a durable connection between the parts is achieved while - depending on the deformation technique used - the connection between the components might be permanent or a relative movement between the components in certain directions might be possible.

According to a preferred embodiment, the permanent bond comprises a substance-to-substance bond. Such a substance-to-substance bond has been found to be durable and easy to apply during assembly of the brake release mechanism.

Preferably, the substance-to-substance bond is selected from the following list: welding bond, in particular ultrasonic welding bond, adhesive bond. Depending on the material properties of the involved materials, the substance-to-substance bond may be achieved by either using welding or adhesives. All of the mentioned bonding techniques provide a durable connection between the components.

According to another embodiment, the indicator cap comprises a contact surface configured to abut against an end surface of the indicator pin, wherein the substance-to-substance bond is applied to the contact surface of the indicator cap and/or the end surface of the indicator pin. Applying the substance-to-substance bond to the end surface of the indicator pin and the contact surface of the indicator cap increases the surface that may be used for the application of the bond. This increases the stability of the connection between the parts. Preferably, the indicator cap comprises a central opening aligned to the longitudinal axis of the indicator pin, the central opening having an opening diameter being larger than a diameter of an end section of the indicator pin, wherein the central opening is configured for accommodating and centring the indicator pin. In this alternative embodiment, an end section of the indicator pin is guided through an opening in the indicator cap. With the help of this, the indicator pin is centred.

According to yet another preferred embodiment, the permanent deformation portion of the indicator pin is formed as a hot-formed portion, in particular as a weld, in particular ultrasonic weld, in the end section of the indicator pin. With the help of this, either a permanent or a non-permanent connection between the indicator pin and the indicator cap may be achieved. Welding techniques have been found to be easily applicable when assembling the brake release mechanism. For assembly, the indicator pin may be inserted into the receiving space of the release bolt, afterwards, the indicator pin may be secured to the brake release bolt via a locking nut. As a next step, the indicator cap may be directed upon the locking nut while guiding the indicator pin through the central opening, wherein as a last step a welding technique is used to upset the indicator pin to terminate the assembly process.

Preferably, the indicator cap and the indicator pin comprise or are made from plastic, in particular a thermoplastic material.

The selected materials have been found to be beneficial with respect to durability and allow for an application of the different bonding techniques mentioned above.

According to yet another preferred embodiment, the brake release bolt comprises a locking nut arranged at the end phase of the release bolt, the end phase being opposite to the operating section, and a spring element, the spring element being arranged between the locking nut and a protrusion of the indicator pin, for forcing the indicator pin in a first direction along the longitudinal axis towards the operating section. With the help of the spring element, the indicator pin is forced out of the release bolt when the spring brake actuator is in a released state. In case the spring brake actuator is in a driving state at which the release mechanism does not act upon the actuator piston and power spring, the indicator pin is retracted by the running nut against the force of the spring into the release bolt. Thus, it is not visible from the outside.

In a further aspect, the invention relates to a spring brake actuator, in particular a parking or emergency spring brake actuator for use in a commercial vehicle, said actuator comprising an actuator housing having an actuator housing base, a spring brake actuator piston located in said actuator housing for applying a braking force, an actuator power spring located between the actuator housing base and the spring brake actuator piston, said actuator power spring being effective to push the spring brake actuator piston away from the base and a brake release mechanism according to the embodiments described above.

In jet another aspect, the invention relates to a method for assembling a brake release mechanism according to the previous embodiments, comprising the steps: providing the indicator pin, providing the indicator cap, non-releasably connecting the indicator pin to the indicator cap by permanent bonding and/or by permanently deforming a portion of the indicator pin.

The spring brake actuator and the method for assembling the brake release mechanism takes advantage of the same benefits and preferred embodiments as the brake release mechanism according to the invention. In this regard, reference is made to the above explanations and their content is included herein.

The aspects of the invention may best be understood from the following detailed description taken in conjunction with the accompanying figures. The figures are schematic and simplified for clarity, and they just show details to improve the understanding of the claims while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereafter, which show in:
- Fig. 1:: a preferred embodiment of a spring brake actuator according to the concept of the invention in a sectional view;
- Fig. 2:: a brake release mechanism for a spring brake actuator according to the preferred embodiment in a sectional view, and
- Figs. 3, 4:: an alternative embodiment of a brake release mechanism for a spring brake actuator in a sectional view.

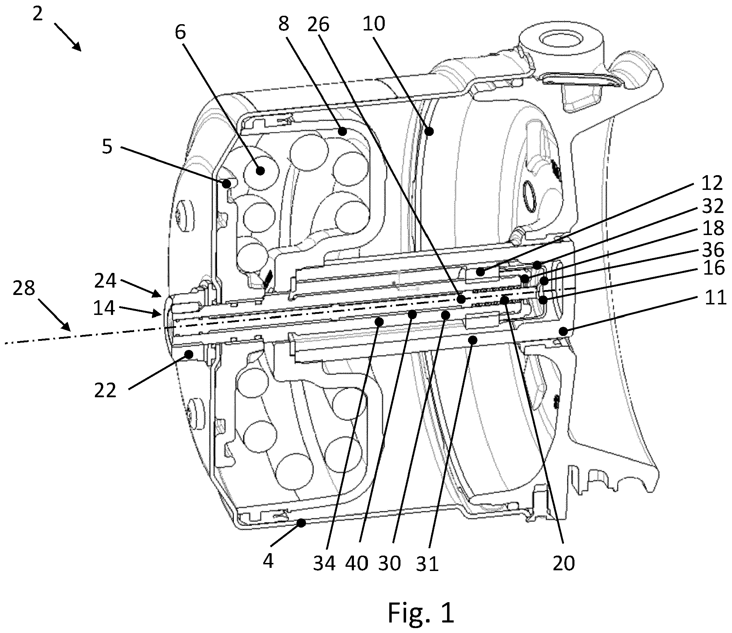

Fig. 1 shows a spring brake actuator 2 having an actuator housing 4. Inside the actuator housing 4, an actuator power spring 6 and a pressure chamber 10 are located. The power spring 6, which rests on the left side in Fig. 1 against an actuator housing base 5 and on the opposing side on a spring brake actuator piston 8, is in Fig. 1 held in the release position by positive pressure inside the pressure chamber 10. The spring brake actuator piston 8 is adapted to transmit the inflicted force to a rod 11 which in turn transmits the applied power to the wheel brakes (not shown).

Furthermore, the spring brake actuator 2 comprises a brake release mechanism 24. The brake release mechanism 24 is utilized to release the spring brake actuator 2. The brake release mechanism 24 comprises a brake release bolt 30 which is rotatably arranged within a release bolt housing 31. The brake release bolt 30 comprises a threaded portion 34 on which a running nut 12 is engaged. The release bolt housing 31 inhibits a rotatability of the running nut 12.

When the brake release bolt 30 is rotated via an external nut 22 located in an operating section 14, the running nut 12 moves along the threaded portion 34 and thus axially along the brake release bolt 30. The running nut 12 is adapted to move the spring brake actuator piston 8 against a force of the actuator power spring 6. In other words, when the running nut 12 moves towards the actuator housing base 5, it forces the spring brake actuator piston 8 towards the actuator housing base 5, thereby compressing the actuator power spring 6. This, in consequence, releases the spring brake actuator 2.

The brake release mechanism 24 furthermore comprises an indicator device 32. The indicator device 32 comprises an indicator pin 26, which is accommodated in a receiving space 40 of the release bolt 30. The indicator pin 26 is capable of moving within the receiving space 40 along a longitudinal axis 28 relative to the brake release bolt 30.

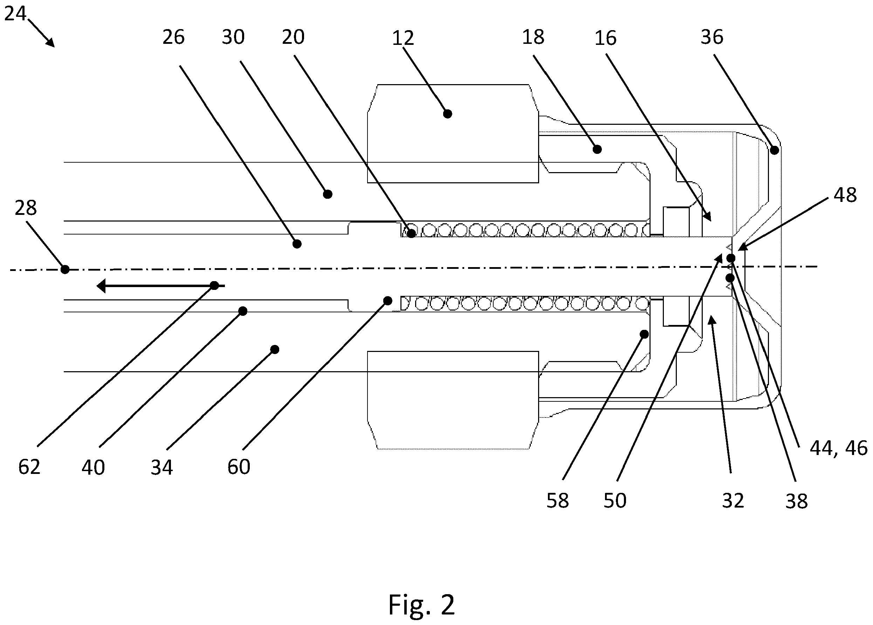

The indicator device 32 comprises a pin actuator 16. The pin actuator 16 comprises an indicator cap 36. The brake release mechanism 24 furthermore comprises a locking nut 18 and a spring element 20, the function of which will also be described with reference to Fig. 2.

Fig. 2 shows the brake release mechanism 24 comprising the brake release bolt 30. The brake release bolt 30 comprises the threaded portion 34 and the operating section 14 for operating the release bolt 30 when inserted into the spring brake actuator 2 (see Fig. 1). The running nut 12 is adapted to axially travel along the threaded portion 34 in order to move the spring brake actuator piston 8 against the force of an actuator power spring 6 (see Fig. 1).

Furthermore, the brake release mechanism 24 comprises the indicator device 32. The indicator device 32 comprises the indicator pin 26 and has a longitudinal axis 28. The indicator pin 26 is at least partially accommodated in the receiving space 40 of the release bolt 30. The pin actuator 16 comprises the indicator cap 36. The indicator cap 36 and the indicator pin 26 are connected to one another by a permanent bond 38. The permanent bond 38 is a substance-to-substance bond 44, in particular an ultrasonic welding bond 46.

The indicator cap 36 comprises a contact surface 48 configured to abut against an end surface 50 of the indicator pin 26. The substance-to-substance bond 44 is applied to the contact surface 48 of the indicator cap 36 and/or the end surface 50 of the indicator pin 26.

The brake release bolt 30 comprises the locking nut 18 arranged at an end face 58 of the release bolt 30. The end face 58 is arranged opposite to the operating section 14. The brake release bolt moreover comprises the spring element 20. The spring element 20 is arranged between the locking nut 18 and a protrusion 60 of the indicator pin 26. The spring element 20 forces the indicator pin 26 in a first direction 62 along the longitudinal axis 28 towards the operating section 14.

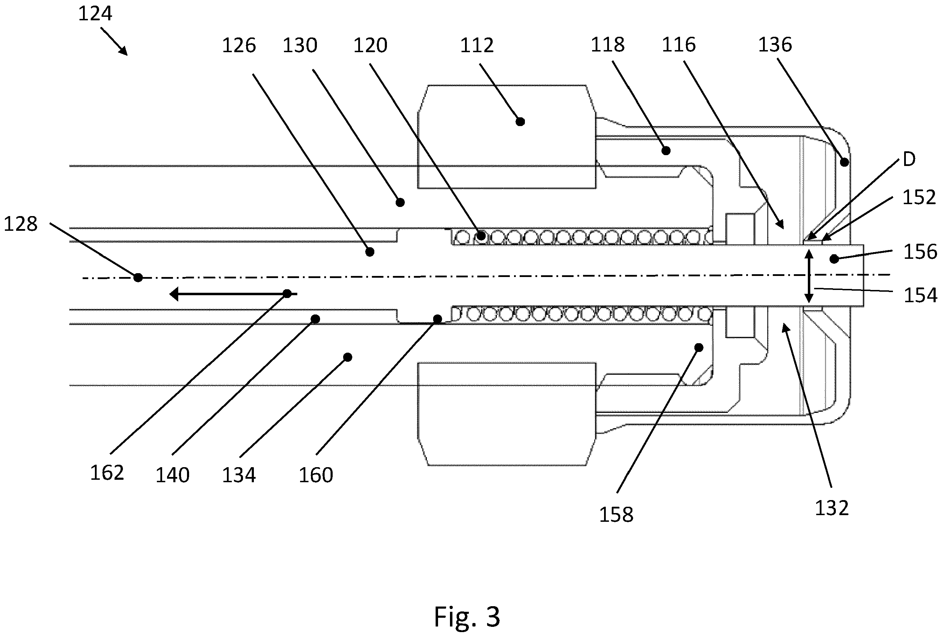

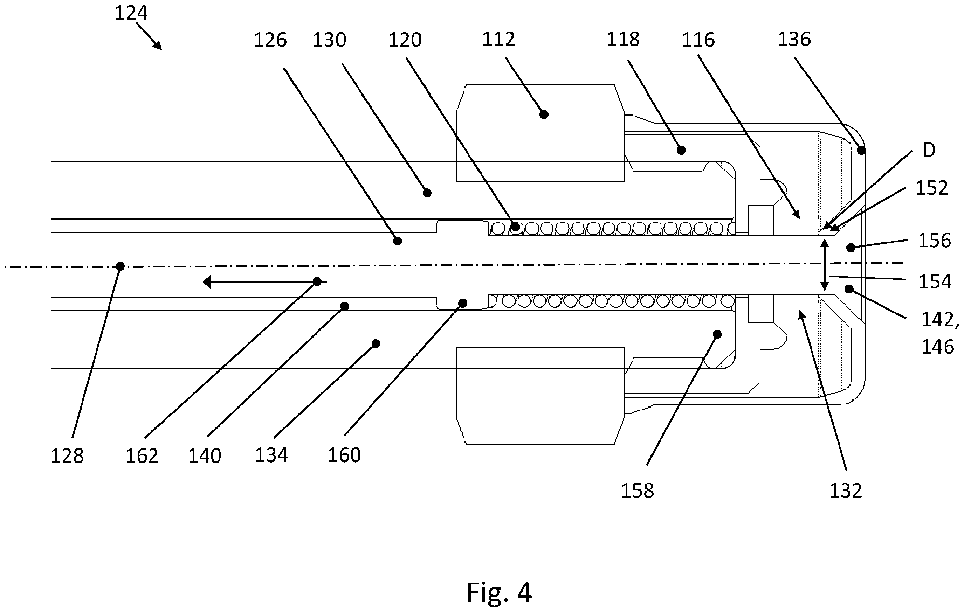

Figs. 3 and 4 show a brake release mechanism 124 comprising a brake release bolt 130. The brake release bolt 130 has a threaded portion 134. A running nut 112 engages the threaded portion 134. The running nut 112 is adapted to axially travel along the threaded portion 134 in order to move a spring brake actuator piston 8 (see Fig. 1) against a force of an actuator power spring 6.

The brake release bolt 130 moreover has an indicator device 132 which comprises an indicator pin 126. The indicator pin 126 has a longitudinal axis 128 and is accommodated in a receiving space 140 of the release bolt 130. The indicator device also comprises a pin actuator 116 for moving the indicator pin 126 relative to the receiving space 140 along its longitudinal axis 128.

The pin actuator 116 comprises an indicator cap 136 being configured to abut against the running nut 112. The pin actuator 116 is configured to move the pin actuator 116 along its longitudinal axis 128.

The brake release bolt 130 comprises a locking nut 118 arranged at an end face 158 of the release bolt 130. Moreover, the brake release bolt 130 comprises a spring element 120. The spring element 120 is arranged between the locking nut 118 and a protrusion 160 of the indicator pin 126, for forcing the indicator pin 126 in a first direction 162 along the longitudinal axis 128 towards the operating section 14 (see Fig. 1).

The indicator cap 136 and the indicator pin 126 are connected to one another by a permanent deformation portion 142 of the indicator pin 126. Herewith, a durable connection between the indicator cap 136 and the indicator pin 126 is achieved.

The indicator cap 136 comprises a central opening 152 aligned to the longitudinal axis 128 of the indicator pin 126. The central opening 152 has an opening-diameter D being larger than a diameter 154 of an end section 156 of the indicator pin 126. The central opening 152 is configured for accommodating and centering the indicator pin 126.

The permanent deformation portion 142 of the indicator pin 126 is achieved by hot or cold forming, in particular by staking or by applying a welding bond 146, in particular an ultrasonic welding bond 146, to the end section 156 of the indicator pin 126.

### List of references

- 2: spring brake actuator
- 4: actuator housing
- 5: actuator housing base
- 6: actuator power spring
- 8: spring brake actuator piston
- 10: pressure chamber
- 11: rod
- 12: running nut
- 14: operating section
- 16: pin actuator
- 18: locking nut
- 20: spring element
- 22: external nut
- 24: brake release mechanism
- 26: indicator pin
- 28: longitudinal axis
- 30: brake release bolt
- 31: release bolt housing
- 32: indicator device
- 34: threaded portion
- 36: indicator cap
- 38: permanent bond
- 40: receiving space of the release bolt
- 44: substance-to-substance bond
- 46: welding bond
- 48: contact surface
- 50: end surface
- 58: release bolt end face
- 60: protrusion of indicator pin
- 62: first direction
- 112: running nut
- 116: pin actuator
- 118: locking nut
- 120: spring element
- 124: brake release mechanism
- 126: indicator pin
- 128: longitudinal axis
- 130: brake release bolt
- 132: indicator device
- 134: threaded portion
- 136: indicator cap
- 140: receiving space of the release bolt
- 142: permanent deformation portion
- 146: welding bond
- 152: central opening
- 154: end section diameter
- 156: end section
- 158: release bolt end face
- 160: protrusion of indicator pin
- 162: first direction
- D: opening diameter

## Claims

1. A brake release mechanism (24, 124) for a spring brake actuator (2), in particular a parking or emergency spring brake actuator (2) for use in a commercial vehicle, said release mechanism (24, 124) comprising:
- a brake release bolt (30, 130) having a threaded portion (34, 134) and an operating section (14) for operating the release bolt (30, 130) when inserted into a spring brake actuator (2),
- a running nut (12, 112) engaging the threaded portion (34, 134), said running nut (12, 112) being adapted to axially travel along the threaded portion (34, 134) in order to move a spring brake actuator piston (8) against a force of an actuator power spring (6),
- an indicator device (32, 132) comprising:
an indicator pin (26, 126) having a longitudinal axis (28, 128) and being at least partially accommodated in a receiving space (40, 140) of the release bolt (30, 130), and a pin actuator (16, 116) for moving the indicator pin (26, 126) relative to the receiving space (40, 140) along its longitudinal axis (28, 128),
and wherein the pin actuator (16, 116) comprises an indicator cap (36, 136) being configured to abut against the running nut (12, 112) for moving the pin actuator (16, 116) along its longitudinal axis (28, 128),
**characterized in that** the indicator cap (36, 136) and the indicator pin (26, 126) are non-releasably connected to one another in their assembled state by a permanent bond (38) and/or by a permanent deformation portion (142) arranged at the indicator pin (26, 126), for providing a durable connection between the indicator cap (36, 136) and the indicator pin (26, 126).

2. The release mechanism (24) according to claim 1,
wherein the permanent bond (38) comprises a substance-to-substance bond (44).

3. The release mechanism (24) according to claim 2, wherein the substance-to-substance bond (44) is selected from the following list:
- welding bond (46), in particular ultrasonic welding bond (46),
- adhesive bond.

4. The release mechanism (24) according to any of the preceding claims, **characterized in that** the indicator cap (36) comprises a contact surface (48) configured to abut against an end surface (50) of the indicator pin (26), and wherein the substance-to-substance bond (44) is applied to the contact surface (48) of the indicator cap (36) and/or the end surface (50) of the indicator pin (26).

5. The release mechanism (124) according to claims 1 - 3,
characterized the indicator cap (136) comprises a central opening (152) aligned to the longitudinal axis (128) of the indicator pin (126), the central opening (152) having an opening-diameter (D) being larger than a diameter (154) of an end section (156) of the indicator pin (126), wherein the central opening (152) is configured for accommodating and centering the indicator pin (126).

6. The release mechanism (124) according to any of the preceding claims, wherein the permanent deformation portion (142) of the indicator pin (126) is formed as a hot-formed portion, in particular as a weld, in particular ultrasonic weld, of the end section (156) of the indicator pin (126).

7. The release mechanism (24, 124) according to any of the preceding claims,
**characterized in that** the indicator cap (36, 136) and indicator pin (26, 126) comprise or are made from a material selected from plastic, in particular a thermoplastic material.

8. The release mechanism (24, 124) according to any of the preceding claims,
**characterized in that** the brake release bolt (30, 130) comprises a locking nut (18, 118) arranged at an end face (58, 158) of the release bolt (30, 130), the end face (58) being opposite to the operating section (14),
and a spring element (20, 120), the spring element (20, 120) being arranged between the locking nut (18, 118) and a protrusion (60, 160) of the indicator pin (26, 126), for forcing the indicator pin (26, 126) in a first direction (62, 162) along the longitudinal axis (28, 128) towards the operating section (14).

9. A spring brake actuator (2), in particular a parking or emergency spring brake actuator (2) for use in a commercial vehicle, said actuator (2) comprising:
- an actuator housing (4) having an actuator housing base (5),
- a spring brake actuator piston (8) located in said actuator housing (4) for applying a braking force,
- an actuator power spring (6) located between the actuator housing base (5) and the spring brake actuator piston (8), said actuator power spring (6) being effective to push the spring brake actuator piston (8) away from the base (5), **characterized by** a brake release mechanism (24, 124) according to any of claims 1-8.

10. Method for assembling a brake release mechanism according to claims 1
- 8, comprising the steps:
- providing the indicator pin (26, 126);
- providing the indicator cap (36, 136);
- non-releasably connecting the indicator pin (26, 126) to the indicator cap (36, 136) by permanent bonding and/or by permanently deforming a portion of the indicator pin (26).

## Patentansprüche

1. Bremslösemechanismus (24, 124) für einen Federspeicherbremszylinder (2), insbesondere einen Park- oder Not-Federspeicherbremszylinder (2) zur Verwendung in einem Nutzfahrzeug, der Lösemechanismus (24, 124) umfassend:
- einen Bremslösebolzen (30, 130), der einen Gewindeabschnitt (34, 134) und einen Betriebsabschnitt (14) zum Betreiben des Lösebolzens (30, 130), wenn er in einen Federspeicherbremszylinder (2) eingesetzt ist, aufweist,
- eine Laufmutter (12, 112), die den Gewindeabschnitt (34, 134) in Eingriff nimmt, wobei die Laufmutter (12, 112) angepasst ist, um sich axial entlang des Gewindeabschnitts (34, 134) zu bewegen, um einen Federspeicherbremszylinderkolben (8) gegen eine Kraft einer Zylindertriebfeder (6) zu bewegen,
- eine Indikatorvorrichtung (32, 132), umfassend:
einen Indikatorstift (26, 126), der eine Längsachse (28, 128) aufweist und mindestens teilweise in einem Aufnahmeraum (40, 140) des Lösebolzens (30, 130) aufgenommen ist, und einen Stiftaktuator (16, 116) zum Bewegen des Indikatorstifts (26, 126) relativ zu dem Aufnahmeraum (40, 140) entlang seiner Längsachse (28, 128), und wobei der Stiftaktuator (16, 116) eine Indikatorkappe (36, 136) umfasst, die konfiguriert ist, um an der Laufmutter (12, 112) anzuliegen, um den Stiftaktuator (16, 116) entlang seiner Längsachse (28, 128) zu bewegen,
**dadurch gekennzeichnet, dass** die Indikatorkappe (36, 136) und der Indikatorstift (26, 126) in ihrem zusammengebauten Zustand durch eine dauerhafte Verbindung (38) und/oder durch einen an dem Indikatorstift (26, 126) angeordneten Dauerverformungsabschnitt (142) nicht lösbar aneinander befestigt sind, um eine haltbare Befestigung zwischen der Indikatorkappe (36, 136) und dem Indikatorstift (26, 126) bereitzustellen.

2. Lösemechanismus (24) nach Anspruch 1,
wobei die dauerhafte Verbindung (38) eine stoffschlüssige Verbindung (44) umfasst.

3. Lösemechanismus (24) nach Anspruch 2, wobei die stoffschlüssige Verbindung (44) aus der folgenden Liste ausgewählt ist:
- Schweißverbindung (46), insbesondere Ultraschallschweißverbindung (46),
- Klebverbindung.

4. Lösemechanismus (24) nach einem der vorstehenden Ansprüche, **dadurch gekennzeichnet, dass** die Indikatorkappe (36) eine Kontaktoberfläche (48) umfasst, die konfiguriert ist, um an einer Endoberfläche (50) des Indikatorstifts (26) anzuliegen, und wobei die stoffschlüssige Verbindung (44) auf die Kontaktoberfläche (48) der Indikatorkappe (36) und/oder die Endoberfläche (50) des Indikatorstifts (26) aufgebracht ist.

5. Lösemechanismus (124) nach den Ansprüchen 1 bis 3, **gekennzeichnet** die Indikatorkappe (136) eine zentrale Öffnung (152) umfasst, die an der Längsachse (128) des Indikatorstifts (126) ausgerichtet ist, wobei die zentrale Öffnung (152) einen Öffnungsdurchmesser (D) aufweist, der größer ist als ein Durchmesser (154) eines Endabschnitts (156) des Indikatorstifts (126), wobei die zentrale Öffnung (152) zum Aufnehmen und Zentrieren des Indikatorstifts (126) konfiguriert ist.

6. Lösemechanismus (124) nach einem der vorstehenden Ansprüche,
wobei der Dauerverformungsabschnitt (142) des Indikatorstifts (126) als ein warmumgeformter Abschnitt ausgebildet ist, insbesondere als eine Schweißverbindung, insbesondere Ultraschallschweißverbindung, des Endabschnitts (156) des Indikatorstifts (126).

7. Lösemechanismus (24, 124) nach einem der vorstehenden Ansprüche,
**dadurch gekennzeichnet, dass** die Indikatorkappe (36, 136) und der Indikatorstift (26, 126) ein aus Kunststoff ausgewähltes Material, insbesondere ein thermoplastisches Material, umfassen oder aus diesem hergestellt sind.

8. Lösemechanismus (24, 124) nach einem der vorstehenden Ansprüche,
**dadurch gekennzeichnet, dass** der Bremslösebolzen (30, 130) eine an einer Stirnseite (58, 158) des Lösebolzens (30, 130) angeordnete Sicherungsmutter (18, 118) umfasst, wobei die Stirnseite (58) dem Betriebsabschnitt (14) gegenüberliegt,
und ein Federelement (20, 120), wobei das Federelement (20, 120) zwischen der Sicherungsmutter (18, 118) und einem Vorsprung (60, 160) des Indikatorstifts (26, 126) angeordnet ist, um den Indikatorstift (26, 126) in eine erste Richtung (62, 162) entlang der Längsachse (28, 128) in Richtung des Betriebsabschnitts (14) zu zwingen.

9. Federspeicherbremszylinder (2), insbesondere ein Park- oder Not-Federspeicherbremszylinder (2) zur Verwendung in einem Nutzfahrzeug, der Zylinder (2) umfassend:
- ein Zylindergehäuse (4), das eine Zylindergehäusebasis (5) aufweist,
- einen in dem Zylindergehäuse (4) befindlichen Federspeicherbremszylinderkolben (8) zum Ausüben einer Bremskraft,
- eine Zylindertriebfeder (6), die sich zwischen der Zylindergehäusebasis (5) und dem Federspeicherbremszylinderkolben (8) befindet, wobei die Zylindertriebfeder (6) wirksam ist, um den Federspeicherbremszylinderkolben (8) von der Basis (5) weg zu drücken, **gekennzeichnet durch** einen Bremslösemechanismus (24, 124) nach einem der Ansprüche 1 bis 8.

10. Verfahren zum Zusammenbauen eines Bremslösemechanismus nach den Ansprüchen 1 bis 8, umfassend die Schritte:
- Bereitstellen des Indikatorstifts (26, 126);
- Bereitstellen der Indikatorkappe (36, 136);
- nicht lösbares Befestigen des Indikatorstifts (26, 126) an der Indikatorkappe (36, 136) durch dauerhaftes Verbinden und/oder durch dauerhaftes Verformen eines Abschnitts des Indikatorstifts (26).

## Revendications

1. Mécanisme de desserrage de frein (24, 124) pour un cylindre de frein à ressort (2), en particulier un cylindre de frein à ressort de stationnement ou d'urgence (2) pour une utilisation dans un véhicule utilitaire, ledit mécanisme de desserrage (24, 124) comprenant :
- un boulon de desserrage de frein (30, 130) ayant une partie filetée (34, 134) et une section d'actionnement (14) pour actionner le boulon de desserrage (30, 130) lorsqu'il est inséré dans un cylindre de frein à ressort (2),
- un écrou mobile (12, 112) venant en prise avec la partie filetée (34, 134), ledit écrou mobile (12, 112) étant adapté pour se déplacer axialement le long de la partie filetée (34, 134) afin de déplacer un piston de cylindre de frein à ressort (8) contre une force d'un ressort moteur de cylindre (6),
- un dispositif indicateur (32, 132) comprenant :
une goupille indicatrice (26, 126) ayant un axe longitudinal (28, 128) et étant au moins partiellement logée dans un espace de réception (40, 140) du boulon de desserrage (30, 130), et un actionneur de goupille (16, 116) pour déplacer la goupille indicatrice (26, 126) par rapport à l'espace de réception (40, 140) le long de son axe longitudinal (28, 128), et l'actionneur de goupille (16, 116) comprenant un capuchon indicateur (36, 136) qui est conçu pour venir en butée contre l'écrou mobile (12, 112) pour déplacer l'actionneur de goupille (16, 116) le long de son axe longitudinal (28, 128),
**caractérisé en ce que** le capuchon indicateur (36, 136) et la goupille indicatrice (26, 126) sont reliés de manière non amovible l'un à l'autre dans leur état assemblé par une liaison permanente (38) et/ou par une partie à déformation permanente (142) agencée au niveau de la goupille indicatrice (26, 126), pour fournir une liaison durable entre le capuchon indicateur (36, 136) et la goupille indicatrice (26, 126).

2. Mécanisme de desserrage (24) selon la revendication 1, dans lequel la liaison permanente (38) comprend une liaison substance à substance (44).

3. Mécanisme de desserrage (24) selon la revendication 2, dans lequel la liaison substance à substance (44) est choisie dans la liste suivante :
- liaison par soudage (46), en particulier liaison par soudage par ultrasons (46),
- liaison adhésive.

4. Mécanisme de desserrage (24) selon l'une quelconque des revendications précédentes, **caractérisé en ce que** le capuchon indicateur (36) comprend une surface de contact (48) conçue pour venir en butée contre une surface d'extrémité (50) de la goupille indicatrice (26), et la liaison substance à substance (44) étant appliquée à la surface de contact (48) du capuchon indicateur (36) et/ou à la surface d'extrémité (50) de la goupille indicatrice (26).

5. Mécanisme de desserrage (124) selon les revendications 1 à 3, **caractérisé en ce que** le capuchon indicateur (136) comprend une ouverture centrale (152) alignée sur l'axe longitudinal (128) de la goupille indicatrice (126), l'ouverture centrale (152) ayant un diamètre d'ouverture (D) qui est supérieur à un diamètre (154) d'une section d'extrémité (156) de la goupille indicatrice (126), l'ouverture centrale (152) étant conçue pour loger et centrer la goupille indicatrice (126).

6. Mécanisme de desserrage (124) selon l'une quelconque des revendications précédentes, dans lequel la partie à déformation permanente (142) de la goupille indicatrice (126) est formée comme une partie formée à chaud, en particulier comme une soudure, en particulier une soudure par ultrasons, de la section d'extrémité (156) de la goupille indicatrice (126).

7. Mécanisme de desserrage (24, 124) selon l'une quelconque des revendications précédentes,
**caractérisé en ce que** le capuchon indicateur (36, 136) et la goupille indicatrice (26, 126) comprennent ou sont réalisés en un matériau choisi parmi une matière plastique, en particulier un matériau thermoplastique.

8. Mécanisme de desserrage (24, 124) selon l'une quelconque des revendications précédentes,
**caractérisé en ce que** le boulon de desserrage de frein (30, 130) comprend un écrou de blocage (18, 118) agencé au niveau d'une face d'extrémité (58, 158) du boulon de desserrage (30, 130), la face d'extrémité (58) étant opposée à la section d'actionnement (14),
et un élément ressort (20, 120), l'élément ressort (20, 120) étant agencé entre l'écrou de blocage (18, 118) et une saillie (60, 160) de la goupille indicatrice (26, 126), pour forcer la goupille indicatrice (26, 126) dans une première direction (62, 162) le long de l'axe longitudinal (28, 128) vers la section d'actionnement (14).

9. Cylindre de frein à ressort (2), en particulier un cylindre de frein à ressort de stationnement ou d'urgence (2) pour une utilisation dans un véhicule utilitaire, ledit cylindre (2) comprenant :
- un logement de cylindre (4) ayant une base de logement de cylindre (5),
- un piston de cylindre de frein à ressort (8) situé dans ledit logement de cylindre (4) pour appliquer une force de freinage,
- un ressort moteur de cylindre (6) situé entre la base de logement de cylindre (5) et le piston de cylindre de frein à ressort (8), ledit ressort moteur de cylindre (6) étant efficace pour pousser le piston de cylindre de frein à ressort (8) loin de la base (5), **caractérisé par** un mécanisme de desserrage de frein (24, 124) selon l'une quelconque des revendications 1 à 8.

10. Procédé permettant d'assembler un mécanisme de desserrage de frein selon les revendications 1 à 8, comprenant les étapes consistant à :
- fournir la goupille indicatrice (26, 126) ;
- fournir le capuchon indicateur (36, 136) ;
- relier de manière non amovible la goupille indicatrice (26, 126) au capuchon indicateur (36, 136) par liaison permanente et/ou par déformation permanente d'une partie de la goupille indicatrice (26).
